# FASCICULE DE BREVET EUROPEEN

(11) **EP 0 964 494 B1**
(45) Date de publication et mention de la délivrance du brevet: **09.05.2007**
(21) Numéro de dépôt: 99401369.6
(22) Date de dépôt: 08.06.1999
(51) Int. Cl.: H02G 3/06, H02G 3/10, H02G 3/04

(54) **Accessoire de dérivation pour installation électrique, et installation électrique correspondante**
Abzweigungszubehör für Elektroinstallation sowie Elektroinstallation
Derivation accessory for electrical installation and associated electrical installation

(30) Priorité: 12.06.1998 FR 9807413
(43) Date de publication de la demande: 15.12.1999
(73) Titulaire: LEGRAND, 87000 Limoges (FR); LEGRAND SNC, 87000 Limoges (FR)
(72) Inventeur: Jadaud, Alain, 72240 Tennie (FR)
(74) Mandataire: Santarelli

(56) Documents cités:
- EP-A- 0 440 556
- DE-A- 2 418 451
- FR-A- 2 753 843
- US-A- 2 043 776

## Description

La présente invention concerne d'une manière générale les installations électriques qui comportent, en saillie, sur une quelconque paroi, par exemple un mur, pour le logement et la protection de conducteurs électriques, au moins une goulotte, qui, par exemple court en plinthe au niveau du plancher, ou qui, en variante, forme une moulure sur la paroi qui la porte.

Cette goulotte peut également servir par elle-même au support, au logement et la protection de quelconques appareillages électriques, tels que, par exemple, des socles de prise de courant, et ces appareillages électriques sont alors directement desservis par les conducteurs qu'elle contient.

Mais il peut arriver qu'un tel appareillage électrique, ou un quelconque autre appareil électrique, soit à implanter à distance d'une telle goulotte, et cela peut être le cas, par exemple, pour une applique de chevet.

Il convient, alors, d'établir une dérivation entre la goulotte et cet appareil électrique.

Plus précisément, il convient, alors, de mettre en place, entre la goulotte et l'appareil électrique concerné, pour le logement et la protection des conducteurs électriques nécessaires, un conduit dérivé.

Suivant un premier mode de mise en oeuvre envisageable, ce conduit dérivé est établi en saillie sur la paroi correspondante, comme la goulotte.

Mais, ainsi en saillie sur cette paroi, ce conduit dérivé ne donne pas toujours satisfaction du point de vue de l'esthétique.

Suivant un deuxième mode de mise en oeuvre également envisageable, le conduit dérivé est au contraire encastré au sein même de la paroi à équiper.

Dans le document EP-A-0 440 556, l'appareil électrique est disposé à une distance déterminée correspondant à la hauteur du conduit dérivé qui s'étend du logement pour le mécanisme de l'appareillage jusqu'à la goulotte.

Dans le brevet suédois publié sous le No 450 442, il est mis en oeuvre, pour établir une liaison entre la goulotte et le conduit dérivées, une boîte de dérivation, qui, comme la goulotte, est implantée en saillie sur la paroi concernée, et dont le fond présente au moins un opercule défonçable pour que le conduit dérivé puisse y être engagé.

Par exemple, cette boîte de dérivation intervient à l'une des extrémités de la goulotte.

En variante, elle intervient entre deux tronçons successifs de celle-ci.

Dans tous les cas, elle déborde, latéralement, de la goulotte, d'un côté au moins de celle-ci, pour être en mesure de satisfaire à plusieurs largeurs possibles pour cette goulotte, et, par suite, le fait que, comme cette goulotte, elle soit elle aussi en saillie sur la paroi concernée peut, comme précédemment, être assez pénalisant du point de-vue de l'esthétique.

La présente invention a d'une manière générale pour objet une disposition permettant d'éviter cet inconvénient et conduisant en outre à d'autres avantages.

De manière plus précise, elle a tout d'abord pour objet un accessoire de dérivation pour installation électrique, du genre destiné à assurer une liaison entre une goulotte en saillie et un conduit dérivé encastré, et caractérisé d'une manière générale en ce qu'il comporte un fond par l'une au moins des extrémités duquel, dite ici par simple commodité extrémité d'emboîtement, il est propre à recevoir par emboîtement le conduit dérivé ; elle a encore pour objet toute installation électrique mettant en oeuvre un tel accessoire de dérivation.

Venant tout naturellement dans le prolongement du conduit dérivé, l'accessoire de dérivation suivant l'invention est, comme celui-ci, destiné à être encastré.

Il ne fait dès lors avantageusement aucune saillie sur la paroi ainsi équipée.

A la mise en place, l'engagement, avec lui, du conduit dérivé est en outre particulièrement rapide et aisé, puisque cet engagement implique un simple emboîtement.

Enfin, lorsque l'accessoire de dérivation suivant l'invention intervient entre deux tronçons successifs d'une goulotte, il assure avantageusement par lui-même toute la continuité d'isolation souhaitable de l'un à l'autre des socles de ces deux tronçons de goulotte.

Corollairement, un même couvercle peut, si désiré, intervenir en continu de l'un à l'autre de ces socles, en recouvrant, au passage, l'accessoire de dérivation suivant l'invention.

Du point de vue de l'esthétique, tout se passe dès lors avantageusement comme si seule une goulotte courrait en continu sur la paroi ainsi équipée, sans une quelconque autre saillie sur celle-ci.

Par exemple, la forme générale du fond de l'accessoire de dérivation suivant l'invention est celle d'un demi-tube dont la section transversale est sensiblement à l'image d'une moitié de celle du conduit dérivé mis en oeuvre.

Préférentiellement, ce conduit dérivé est un conduit flexible annelé.

Lorsque, conjointement, la paroi à équiper est réalisée à l'aide de plaques de plâtre doublées d'une garniture en matière isolante sur leur face cachée, c'est-à-dire sur leur face arrière, il est avantageusement possible de mettre en place un tel conduit dérivé sans aucune intervention sur la face visible de ces plaques de plâtre, c'est-à-dire sur leur face avant.

Il suffit, en effet, une ouverture ayant été nécessairement réalisée dans une telle plaque de plâtre pour l'implantation de l'appareil électrique concerné, d'introduire, par cette ouverture, un outil propre à permettre d'enlever localement la garniture en matière isolante sur le trajet prévu pour le conduit dérivé, de cette ouverture à la goulotte concernée.

L'opération correspondante peut avantageusement être conduite sans qu'il résulte une quelconque détérioration en façade pour la paroi ainsi travaillée, ce qui évite avantageusement toute éventuelle reprise de la décoration de celle-ci, au bénéfice du temps d'intervention et des coûts.

Lorsque le conduit dérivé est ainsi un conduit flexible annelé, le fond de l'accessoire suivant l'invention comporte, préférentiellement, à son extrémité d'emboîtement, pour l'emboîtement de ce conduit dérivé, au moins un demi-anneau dont la forme est sensiblement complémentaire de celle des gorges de ce conduit dérivé.

Par exemple, suivant une forme préférée de réalisation, ce demi-anneau résulte de la configuration même de ce fond, et celui-ci comporte des demi-anneaux sur toute sa longueur.

Par son fond, l'accessoire de dérivation a alors une configuration en demi-tube annelé, qui facilite avantageusement son éventuel tronçonnage, en permettant ainsi de l'adapter très facilement en longueur à la largeur de la goulotte concernée, et qui est en outre avantageusement favorable à sa rigidité.

Cette configuration en demi-tube annelé évite également avantageusement les difficultés de moulage qui n'auraient autrement pas manqué de se soulever si, pour le tronçonnage recherché, il avait été prévu, de manière usuelle, sur le fond de l'accessoire de dérivation suivant l'invention, des zones de moindre résistance.

Elle incline enfin avantageusement à utiliser un outil de coupe pour ce tronçonnage, parce qu'elle permet tout naturellement un guidage aisé de cet outil de coupe, au milieu de chaque demi-anneau, ce qui est favorable à l'obtention d'un tronçonnage net relativement difficile à obtenir autrement.

Quoi qu'il en soit, c'est-à-dire quelle que soit la configuration particulière du fond de l'accessoire de dérivation suivant l'invention, une installation électrique mettant en oeuvre un tel accessoire de dérivation assure avantageusement un bon compromis entre une installation totalement encastrée, de type classique, qui nécessite des travaux importants et impose en plus d'avoir à refaire la décoration de surface de la paroi concernée, et une installation totalement en saillie, de type également classique, qui nécessite généralement pour sa réalisation tout un ensemble relativement complexe de goulottes et d'accessoires, au détriment de l'esthétique.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un accessoire de dérivation suivant l'invention ;
la figure 2 en est, à échelle supérieure, une vue partielle en coupe longitudinale, suivant la ligne II-II de la figure 1 ;
la figure 3 en est une vue en coupe transversale, suivant la ligne III-III de la figure 2;
la figure 4 reprend, à échelle supérieure, le détail de la figure 3 repéré par un encart IV sur cette figure 3 ;
la figure 5 est une vue en perspective éclatée concernant l'ensemble d'une installation électrique mettant en oeuvre un accessoire de dérivation suivant l'invention ;
la figure 6 est une vue partielle en coupe de cette installation, au droit de l'accessoire de dérivation suivant l'invention, suivant la ligne VI-VI de la figure 5 ;
la figure 7 est une vue en perspective d'une cloison susceptible d'être associée à l'accessoire de dérivation suivant l'invention.

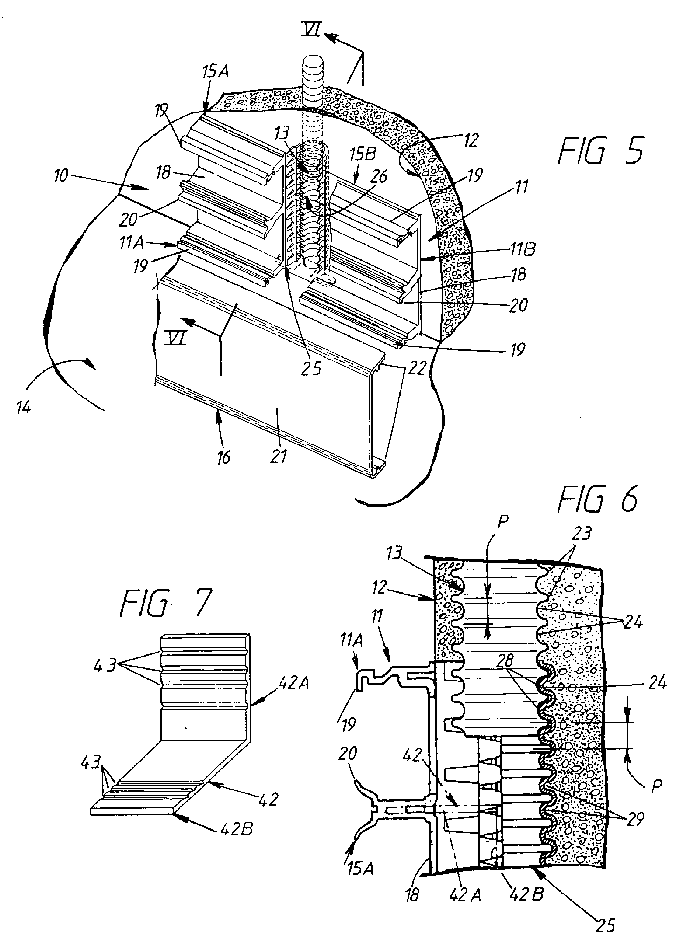

Tel qu'illustré sur ces figures, et ainsi qu'il ressort plus particulièrement des figures 5 et 6, une installation électrique 10 suivant l'invention met en oeuvre, conjointement, d'une part, une goulotte 11, qui est rapportée en saillie sur une quelconque paroi 12, par exemple un mur, et, d'autre part, un conduit dérivé 13, qui, lui, est encastré dans cette paroi 12.

Dans la forme de mise en oeuvre représentée, la goulotte 11 court en plinthe au bas du mur formant la paroi 12, à niveau avec le sol 14 correspondant.

Par goulotte, on entend ici, de manière usuelle, un profilé composé, d'une part, d'un socle, dont la section transversale est ouverte, et, d'autre part, d'un couvercle, qui est apte à fermer ce socle.

Pour l'intervention du conduit dérivé 13, la goulotte 11 est, en pratique, fractionnée en deux tronçons de goulotte 11A, 11B, dont les socles 15A, 15B sont écartés l'un de l'autre tout en étant alignés l'un avec l'autre, et qui, par contre, et tel que représenté, peuvent par exemple être fermés par un couvercle 16 commun, ce couvercle 16 courant en continu de l'un à l'autre des socles 15A, 15B.

La goulotte 11 ne relevant pas, en propre, de la présente invention, elle ne sera pas décrite dans tous ses détails ici.

Dans la forme de réalisation représentée, les socles 15A, 15B, qui, bien évidemment, ont un même profil, ont une section transversale en U, avec un fond 18 et deux ailes latérales 19.

Ils comportent, en outre, dans cette forme de réalisation, entre leurs ailes latérales 19, au moins une cloison de séparation 20, qui court longitudinalement sur toute leur longueur, entre leurs ailes latérales 19, pour compartimenter leur volume intérieur.

Par mesure de simplicité, seule une telle cloison de séparation 20 a été prévue sur la figure 5.

Dans la forme de réalisation représentée, le couvercle 16, qui a lui aussi une section transversale en U, coiffe de l'extérieur les socles 15A, 15B.

Il comporte une paroi de façade 21 et deux ailes latérales 22.

Suivant des modalités usuelles en la matière, qui ne seront donc pas décrites ici, des moyens d'encliquetage sont prévus entre ce couvercle 16 et les socles 15A, 15B.

D'une manière générale, le conduit dérivé 13 est un tube, et, par exemple, sa section transversale est circulaire.

Dans la forme de mise en oeuvre représentée, le conduit dérivé 13 est, plus précisément, un conduit flexible annelé.

Un tel conduit dérivé 13 flexible et annelé étant lui aussi bien connu par lui-même, il ne sera pas non plus décrit en détail ici.

Il suffira de rappeler que sa paroi est ondulée à pleine épaisseur, et qu'il forme ainsi, transversalement, de place en place, suivant en pratique un pas P régulier, des anneaux 23, qui alternent avec des gorges 24.

En pratique, les anneaux 23 ont, en plan, un contour circulaire identique pour tous, et il en est de même pour les gorges 24.

Dans la forme de mise en oeuvre représentée, le conduit dérivé 13 intervient transversalement par rapport à la goulotte 11.

Pour assurer une liaison entre la goulotte 11 et ce conduit dérivé 13, il est mis en oeuvre un accessoire de dérivation 25.

Lorsque, comme en l'espèce, la goulotte 11 est fractionnée en deux tronçons de goulotte 11A, 11B, cet accessoire de dérivation 25 intervient entre les socles 15A, 15B des deux tronçons de goulotte 11A, 11B correspondants, pour assurer une continuité d'isolation de l'un à l'autre de ces socles 15A, 15B par rapport à la paroi 12.

Suivant l'invention, l'accessoire de dérivation 25 est encastré, comme le conduit dérivé 13, dans la paroi 12, dans le prolongement du conduit dérivé 13.

A la différence, cependant, du conduit dérivé 13, il n'est pas noyé dans cette paroi 12, en restant au contraire dégagé du côté de la surface extérieure de celle-ci.

En pratique, l'accessoire de dérivation 25 est disposé de manière à s'étendre à l'arrière du conduit dérivé 13.

Suivant l'invention, également, cet accessoire de dérivation 25 comporte un fond 26 par l'une au moins, 27, des extrémités duquel, dite ici par simple commodité extrémité d'emboîtement, qui est bien entendu celle la plus proche du conduit dérivé 13, il est propre à recevoir, par emboîtement, le conduit dérivé 13.

Préférentiellement, et cela est le cas dans la forme de réalisation représentée, la forme générale du fond 26 de l'accessoire de dérivation 25 suivant l'invention est celle d'un demi-tube dont la section transversale est sensiblement à l'image d'une moitié de celle du conduit dérivé 13.

Lorsque, comme en l'espèce, le conduit dérivé 13 a, globalement, une section transversale circulaire, la section transversale du fond 26 de l'accessoire 25 suivant l'invention est, donc, elle, globalement hémicirculaire.

Lorsque, en outre, le conduit dérivé 13 est, comme en l'espèce, un conduit flexible annelé, le fond 26 de cet accessoire de dérivation 25 comporte, à son extrémité d'emboîtement 27, en saillie vers l'intérieur, au moins un demi-anneau 28 dont la forme est sensiblement complémentaire de celle des gorges 24 de ce conduit dérivé 13

Préférentiellement, et cela est le cas dans la forme de réalisation représentée, le fond 26 de l'accessoire de dérivation 25 suivant l'invention comporte, successivement, à compter de son extrémité d'emboîtement 27, une pluralité de demi-anneaux 28, au même pas P que les anneaux 23 du conduit dérivé 13 , et ces demi-anneaux 28 alternent avec des demi-gorges 29.

En pratique, dans la forme de réalisation représentée, le fond 26 de l'accessoire de dérivation 25 suivant l'invention comporte des demi-anneaux 28 et des demi-gorges 29 sur toute sa longueur.

En pratique, également, le ou les demi-anneaux 28 que comporte ainsi le fond 26 de l'accessoire de dérivation 25 suivant l'invention résultent de la configuration même de ce fond 26, et il en est de même de ses demi-gorges 29.

Autrement dit, le fond 26 de l'accessoire de dérivation 25 suivant l'invention est ondulé à pleine épaisseur, à la manière du conduit dérivé 13.

Dans la forme de réalisation représentée, l'accessoire de dérivation 25 suivant l'invention comporte, le long des bords de son fond 26, deux parois longitudinales 30, qui, parallèles l'une à l'autre, s'étendent sur toute sa longueur

Il comporte en outre, longitudinalement, dans cette forme de réalisation, au-delà de ses parois longitudinales 30, deux ridelles 31, qui font saillie sur des retours 32 que les parois longitudinales 30 présentent dos à dos en équerre vers l'extérieur, et qui, comme celles-ci, sont parallèles l'une à l'autre et s'étendent sur toute la longueur du fond 26.

Dans la forme de réalisation représentée, les ridelles 31 que comporte ainsi l'accessoire de dérivation 25 suivant l'invention sont fragmentées en doigts 33.

A l'extrémité 34 de son fond 26 opposée à son extrémité d'emboîtement 27, l'accessoire de dérivation 25 suivant l'invention est par ailleurs fermé, dans la forme de réalisation représentée, par une paroi transversale d'extrémité 35, et celle-ci s'étend aussi bien au droit de son fond 26 qu'au droit de ses parois longitudinales 30 et de ses ridelles 31, en s'étendant même au-delà du bord libre de ces dernières dans sa partie médiane.

Préférentiellement, et tel que représenté, une partie, au moins, de cette paroi transversale d'extrémité 35 est sécable.

Elle comporte, pour ce faire, dans sa partie centrale, des lignes de prédécoupage 35', 35", qui, par exemple, peuvent être matérialisées par des évidements.

La ligne de prédécoupage 35' est circulaire.

Lorsque l'opercule que délimite cette ligne de prédécoupage 35' est éliminé, il est possible de venir fixer, à travers elle, par emboîtement, à l'accessoire de dérivation 25 suivant l'invention, à l'extrémité 34 du fond 26 de celui-ci opposée à l'extrémité d'emboîtement 27 déjà prévue à cet effet, un conduit supplémentaire, non représenté sur les figures.

De même, deux lignes de prédécoupage 35", qui s'étendent sensiblement tangentiellement à la ligne de prédécoupage 35', permettent, après l'élimination du panneau central qu'elles délimitent, l'emboîtement d'un conduit, notamment lorsque celui-ci vient du sol ; il arrive en effet fréquemment qu'un tel conduit intervienne à la base d'une paroi, très près de la surface du sol.

A l'extrémité 34 de son fond 26 opposée à son extrémité d'emboîtement 27, l'accessoire de dérivation 25 suivant l'invention comporte, par ailleurs, extérieurement, en saillie, dans la forme de réalisation représentée, des ailes de fixation 36, qui, en pratique, prolongent latéralement, et de part et d'autre, sa paroi transversale d'extrémité 35.

Préférentiellement, ces ailes de fixation 36 sont sécables, ce qui, après leur élimination peut faciliter l'implantation de l'accessoire de dérivation 25 suivant l'invention dans une rainure du type de celles réalisées à l'aide d'un outil à rainurer.

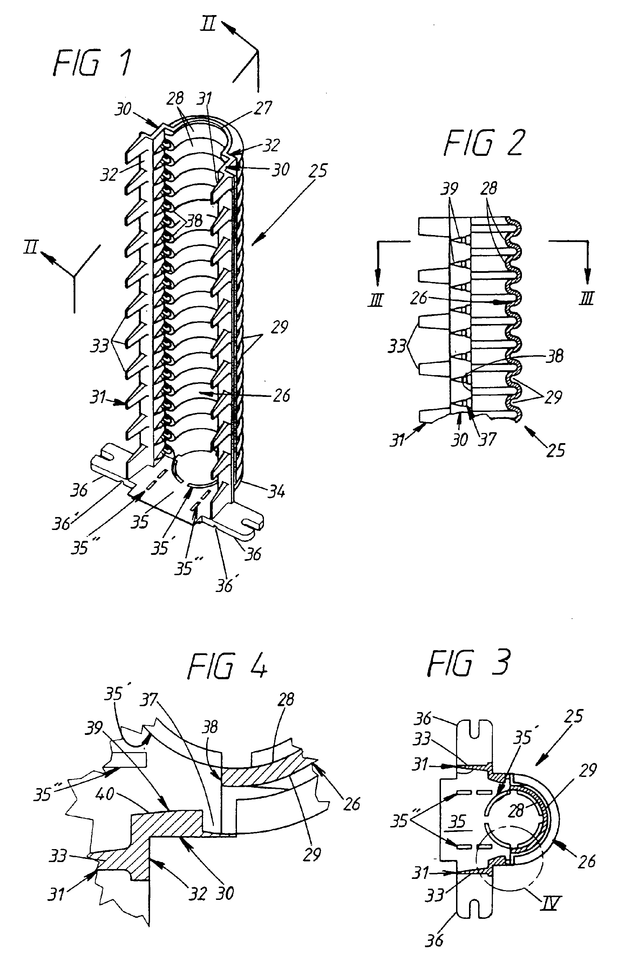

Par exemple, et tel que représenté, figure 1, il est prévu, transversalement, pour ce faire, en creux sur la surface inférieure de ces ailes de fixation 36, à la racine de celles-ci, une rainure 36'.

Enfin, dans la forme de réalisation représentée, l'accessoire de dérivation 25 suivant l'invention comporte, au raccordement de ses parois longitudinales 30 avec son fond 26, deux rainures d'encliquetage 37, qui, ainsi établies à un même niveau, et parallèles l'une à l'autre, courent sur toute sa longueur.

Dans la forme de réalisation représentée, chacune de ces rainures d'encliquetage 37 est formée entre, d'une part, les extrémités 38 correspondantes des demi-anneaux 28 du fond 26, et, d'autre part, des bossages 39 présents de place en place en saillie vers l'intérieur sur la paroi longitudinale 30 concernée, à raison d'un bossage 39 par demi-anneau 28 du fond 26.

Ces bossages 39, tous identiques entre eux, sont, en pratique, en forme de quart d'olive.

Chacun d'eux forme donc un chanfrein d'engagement 40, en direction de la rainure d'encliquetage 37 associée.

En pratique, l'accessoire de dérivation 25 suivant l'invention est réalisé en matière synthétique.

Dans la forme de réalisation représentée, il est, par ailleurs, associé à l'accessoire de dérivation 25 suivant l'invention, au moins une cloison 42 présentant deux pans 42A, 42B, qui forment un dièdre entre eux, et dont un, au moins, a une largeur suffisante pour pouvoir s'étendre localement de l'une à l'autre des rainures d'encliquetage 37 de cet accessoire de dérivation 25, en étant alors en prise par sa tranche avec celles-ci.

En pratique, les deux pans 42A, 42B de cette cloison 42 ont une même largeur, et le dièdre qu'ils forment entre eux est un dièdre droit.

Préférentiellement, et cela est le cas dans la forme de réalisation représentée, l'un au moins de ces pans 42A, 42B de la cloison 42, et, en pratique, chacun de ceux-ci, comporte, transversalement, au moins une rainure 43, pour en faciliter un éventuel tronçonnage en longueur.

Par exemple, et tel que représenté, chacun de ces pans 42A, 42B présente, de place en place, plusieurs rainures 43.

Comme l'accessoire de dérivation 25, la cloison 42 est, par exemple, réalisée en matière synthétique.

Au montage, l'accessoire de dérivation 25 suivant l'invention est encastré dans la paroi 12 au droit du conduit dérivé 13, à l'arrière de celui-ci, et ce conduit dérivé 13, qui fait légèrement saillie dans l'intervalle séparant l'un de l'autre les socles 15A, 15B des deux tronçons de goulotte 11A, 11B, est alors emboîté, de l'avant, par un ou plusieurs de ses anneaux 23, ou, plus exactement, par les gorges 24 séparant ceux-ci, dans les demi-anneaux 28 correspondants de cet accessoire de dérivation 25, comme représenté sur la figure 6.

Préférentiellement, l'accessoire de dérivation 25 suivant l'invention est adapté en hauteur à la goulotte 11.

Il suffit, pour ce faire, de le tronçonner en conséquence du côté de son extrémité d'emboîtement 27.

Ainsi qu'il est aisé de le comprendre, ce tronçonnage se trouve facilité par sa configuration annelée.

Quoi qu'il en soit, du fait que cette configuration annelée s'étend sur une partie au moins de sa longueur, l'accessoire de dérivation 25 suivant l'invention présente, toujours, à son extrémité d'emboîtement 27, un ou plusieurs demi-anneaux 28 propres à permettre d'y emboîter le conduit dérivé 13.

Ainsi qu'il est également aisé de le comprendre, les ailes de fixation 36 que comporte l'accessoire de dérivation 25 suivant l'invention sont de nature à faciliter son maintien lors de sa mise en place.

Si désiré, et tel que schématisé en traits interrompus sur la figure 6, une cloison 42 est rapportée, par l'un ou l'autre de ses pans 42A, 42B, par exemple par son pan 42A, sur l'accessoire de dérivation 25 suivant l'invention, en faisant en sorte que l'autre de ses pans 42A, 42B, et, donc, en l'espèce, son pan 428, s'étende alors au droit de la cloison de séparation 20 des socles 15A, 15B des tronçons de goulotte 11A, 11B.

Il est ainsi avantageusement obtenu toute la continuité souhaitable pour la séparation correspondante.

En particulier, au lieu d'intervenir entre deux tronçons successifs d'une goulotte, l'accessoire de dérivation suivant l'invention pourrait tout aussi bien intervenir en bout d'une telle goulotte.

En outre, le conduit dérivé n'est pas nécessairement un conduit flexible annelé.

## Revendications

1. Accessoire de dérivation pour installation électrique, du genre destiné à assurer une liaison entre une goulotte en saillie et un conduit dérivé encastré, **caractérisé en ce qu'**il comporte un fond (26) par l'une au moins (27) des extrémités duquel, dite ci-après extrémité d'emboîtement, il est propre à recevoir par emboîtement le conduit dérivé (13).

2. Accessoire de dérivation suivant la revendication 1, **caractérisé en ce que** la forme générale de son fond (26) est celle d'un demi-tube dont la section transversale est sensiblement à l'image d'une moitié de celle du conduit dérivé (13).

3. Accessoire de dérivation suivant la revendication 2, **caractérisé en ce que**, le conduit dérivé (13) étant un conduit flexible annelé, son fond (26) comporte, à son extrémité d'emboîtement (27), au moins un demi-anneau (28) dont la forme est sensiblement complémentaire de celle des gorges (24) de ce conduit dérivé (13).

4. Accessoire de dérivation suivant la revendication 3, **caractérisé en ce que** son fond (26) comporte, successivement, à compter de son extrémité d'emboîtement (27), une pluralité de demi-anneaux (28), au même pas (P) que les anneaux (23) du conduit dérivé (13).

5. Accessoire de dérivation suivant la revendication 4, **caractérisé en ce que** son fond (26) comporte des demi-anneaux (28) sur toute sa longueur.

6. Accessoire de dérivation suivant l'une quelconque des revendications 3 à 5, **caractérisé en ce que** le ou les demi-anneaux (28) que comporte son fond (26) résultent de la configuration même de ce fond (26).

7. Accessoire de dérivation suivant l'une quelconque des revendications 1 à 6, **caractérisé en ce qu'**il comporte, le long des bords de son fond (26), deux parois longitudinales (30).

8. Accessoire de dérivation suivant la revendication 7, **caractérisé en ce qu'**il comporte, au raccordement de ses parois longitudinales (30) avec son fond (26), deux rainures d'encliquetage (37).

9. Accessoire de dérivation suivant les revendications 5 et 8, prises conjointement, **caractérisé en ce que** chacune de ses rainures d'encliquetage (37) est formée entre, d'une part, les extrémités (38) correspondantes des demi-anneaux (28) de son fond (26), et, d'autre part, des bossages (39) présents de place en place en saillie sur la paroi longitudinale (30) concernée.

10. Accessoire de dérivation suivant la revendication 9, **caractérisé en ce que** chacun des bossages (39) forme un chanfrein d'engagement (40) en direction de la rainure d'encliquetage (37) associée.

11. Accessoire de dérivation suivant l'une quelconque des revendications 8 à 10, **caractérisé en ce qu'**il lui est associé au moins une cloison (42) présentant deux pans (42A, 42B), qui forment un dièdre entre eux, et dont un, au moins, a une largeur suffisante pour pouvoir s'étendre localement de l'une à l'autre des rainures d'encliquetage (37), en étant alors en prise avec celles-ci.

12. Accessoire de dérivation suivant la revendication 11, **caractérisé en ce que** l'un au moins des pans (42A, 42B) de la cloison (42) associée comporte, transversalement, au moins une rainure (43), pour en faciliter un éventuel tronçonnage en longueur.

13. Accessoire de dérivation suivant l'une quelconque des revendications 11, 12, **caractérisé en ce que** le dièdre que forment entre eux les deux pans (42A, 42B) de la cloison (42) associée est un dièdre droit.

14. Accessoire de dérivation suivant l'une quelconque des revendications 7 à 13, **caractérisé en ce qu'**il comporte, longitudinalement, au-delà de ses parois longitudinales (30), deux ridelles (31).

15. Accessoire de dérivation suivant la revendication 14, **caractérisé en ce que** les ridelles (31) qu'il comporte sont fragmentées en doigts (33).

16. Accessoire de dérivation suivant l'une quelconque des revendications 1 à 15, **caractérisé en ce que**, à l'extrémité (34) de son fond (26) opposée à son extrémité d'emboîtement (27), il est fermé par une paroi transversale d'extrémité (35).

17. Accessoire de dérivation suivant la revendication 16, **caractérisé en ce qu'**une partie, au moins, de la paroi transversale d'extrémité (35) est sécable.

18. Accessoire de dérivation suivant l'une quelconque des revendications 16, 17, **caractérisé en ce que**, à l'extrémité (34) de son fond (26) opposée à son extrémité d'emboîtement (27), il comporte, extérieurement, en saillie, des ailes de fixation (36).

19. Accessoire de dérivation suivant la revendication 18, **caractérisé en ce que** les ailes de fixation (36) sont sécables.

20. Installation électrique du genre comportant une goulotte (11) en saillie sur une paroi (12) et un conduit dérivé (13) encastré dans cette paroi (12), avec, pour assurer une liaison entre cette goulotte (11) et ce conduit dérivé (13), un accessoire de dérivation (25), **caractérisée en ce que** cet accessoire de dérivation (25) est conforme à l'une quelconque des revendications 1 à 19, et est encastré dans la paroi (12) au droit du conduit dérivé (13).

## Claims

1. A derivation accessory for a piece of electrical equipment, of the kind intended to provide a link between a projecting duct and an embedded, derived conduit, **characterised in that** it comprises a base (26) by at least one (27) of the ends of which, hereinafter called the encasement end, it is capable of receiving the derived conduit (13) by encasement.

2. A derivation accessory according to Claim 1, **characterised in that** the general shape of its base (26) is that of a half-tube, the transverse section of which is substantially the image of half that of the derived conduit (13).

3. A derivation accessory according to Claim 2, **characterised in that** since the derived conduit (13) is a flexible, ringed conduit, the base (26) thereof comprises, at the encasement end (27) thereof, at least one half-ring (28) of substantially complementary shape to that of the grooves (24) of the derived conduit (13).

4. A derivation accessory according to Claim 3, **characterised in that** the base (26) thereof comprises, in succession, from its encasement end (27), a plurality of half-rings (28), with the same pitch (P) as the rings (23) of the derived conduit (13).

5. A derivation accessory according to Claim 4, **characterised in that** the base (26) thereof comprises half-rings (28) over the entire length thereof

6. A derivation accessory according to any one of Claims 3 to 5, **characterised in that** the half-ring(s) (28) which is/are provided on the base (26) thereof result from the configuration itself of that base (26).

7. A derivation accessory according to any one of Claims 1 to 6, **characterised in that** it comprises, along the edges of the base (26) thereof, two longitudinal walls (30),

8. A derivation accessory according to Claim 7, **characterised in that** it comprises, at the join of its longitudinal walls (30) to its base (26), two snap-fixture indents (37).

9. A derivation accessory according to Claims 5 and 8, taken conjointly, **characterised in that** each one of its snap-fixture indents (37) is formed, on the one hand, between the corresponding ends (38) of the half-rings (28) of its base (26), and, on the other hand, between bosses (39) which are present from place to place, in projecting relationship on the longitudinal wall (30) in question.

10. A derivation accessory according to Claim 9, **characterised in that** each one of the bosses (39) forms an engagement bevel (40) in the direction of the associated snap-fixture indent (37).

11. A derivation accessory according to any one of Claims 8 to 10, **characterised in that** associated therewith is at least one partition wall (42) which has two surfaces (42A, 42B) which form a dihedral between them, and at least one of which surfaces is of a width sufficient to be able to extend locally from one of the snap-fixture indents (37) to the other, being thus engaged with these latter.

12. A derivation accessory according to Claim 11, **characterised in that** at least one of the surfaces (42A, 42B) of the associated partition wall (42) comprises transversely at least one groove (43) to facilitate its possible sectioning length-wise,

13. A derivation accessory according to any one of Claims 11, 12, **characterised in that** the dihedral which is formed between the two surfaces (42A, 42B) of the associated partition wall (42) is a perpendicular dihedral.

14. A derivation accessory according to any one of Claims 7 to 13, **characterised in that** it comprises two side panels (31) longitudinally, beyond the longitudinal walls (30),

15. A derivation accessory according to Claim 14, **characterised in that** the side panels (31) which it comprises are broken up into fingers (33),

16. A derivation accessory according to any one of Claims 1 to 15, **characterised in that** at the end (34) of its base (26), opposite its encasement end (27), it is closed by a transverse end wall (35),

17. A derivation accessory according to Claim 16, **characterised in that** at least a part of the transverse end wall (35) can be divided.

18. A derivation accessory according to any one of Claims 16, 17, **characterised in that** at the end (34) of its base (26) opposite its encasement end (27) it comprises externally projecting fixing vanes (36).

19. A derivation accessory according to Claim 18, **characterised in that** the fixing vanes (36) can be divided.

20. A piece of electrical equipment of the kind comprising a duct (11) which projects from a wall (12) and a derived conduit (13) which is embedded in that wall (12), with a derivation accessory (25) for forming a link between that duct (11) and the derived conduit (13), **characterised in that** said derivation accessory (25) is in accordance with any one of Claims 1 to 19, and is embedded in the wall (12) in line with the derived conduit (13).

## Patentansprüche

1. Abzweigungszubehör für elektrische Anlage, das dazu bestimmt ist, eine Verbindung zwischen einer vorstehenden Rinne und einer eingelassenen Zweigleitung zu gewährleisten, **dadurch gekennzeichnet, dass** es einen Boden (26) auf weist, über mindestens eines (27) dessen Enden, im Nachstehenden Einsteckende genannt, es die Zweigleitung (13) durch Einstecken aufnehmen kann.

2. Abzweigungszubehör nach Anspruch 1, **dadurch gekennzeichnet, dass** die allgemeine Form seines Bodens (26) die eines Halbrohrs ist, dessen Querschnitt im Wesentlichen nach dem Bild einer Hälfte des Querschnitts der Zweigleitung (13) ausgebildet ist.

3. Abzweigungszubehör nach Anspruch 2, **dadurch gekennzeichnet, dass**, wenn die Zweigleitung (13) eine flexible geringelte Leitung ist, sein Boden (26) an seinem Einsteckende (27) mindestens einen Halbring (28) aufweist, dessen Form im Wesentlichen zu der der Rillen (24) dieser Zweigleitung (13) komplementär ist.

4. Abzweigungszubehör nach Anspruch 3, **dadurch gekennzeichnet, dass** sein Boden (26), von seinem Einsteckende (27) aus gerechnet, nacheinander eine Vielzahl von Halbringen (28) im selben Schritt (P) wie die Ringe (23) der Zweigleitung (13) aufweist.

5. Abzweigungszubehör nach Anspruch 4, **dadurch gekennzeichnet, dass** sein Boden (26) auf seiner ganzen Länge Halbringe (28) aufweist.

6. Abzweigungszubehör nach einem der Ansprüche 3 bis 5, **dadurch gekennzeichnet, dass** der oder die Halbringe (28), die sein Boden (26) aufweist, sich aus der Ausbildung dieses Bodens (26) selbst ergeben.

7. Abzweigungszubehör nach einem der Ansprüche 1 bis 6, **dadurch gekennzeichnet, dass** es längs der Ränder seines Bodens (26) zwei Längswände (30) aufweist,

8. Abzweigungszubehör nach Anspruch 7, **dadurch gekennzeichnet, dass** es an der Verbindung seiner Längswände (30) mit seinem Boden (26) zwei Einrastnuten (37) aufweist,

9. Abzweigungszubehör nach den Ansprüche 5 und 8 zusammen, **dadurch gekennzeichnet, dass** jede seiner Einrastnuten (37) zwischen einerseits den entsprechenden Enden (38) der Halbringe (28) seines Bodens (26) und andererseits Erhebungen (39) geformt ist, die stellenweise auf der betreffenden Längswand (30) vorstehend vorgesehen sind.

10. Abzweigungszubehör nach Anspruch 9, **dadurch gekennzeichnet, dass** jede der Erhebungen (39) eine Einführungsabschrägung (40) in Richtung der zugeordneten Einrastnut (37) formt.

11. Abzweigungszubehör nach einem der Ansprüche 8 bis 10, **dadurch gekennzeichnet, dass** ihm mindestens eine Trennwand (42) zugeordnet ist, die zwei Wangen (42A, 42B) aufweist, die miteinander ein Dieder bilden und von denen mindestens eine eine ausreichende Breite hat, um sich örtlich von einer der Einrastnuten (37) zur anderen erstrecken zu können, indem sie mit diesen in Eingriff ist.

12. Abzweigungszubehör nach Anspruch 11, **dadurch gekennzeichnet, dass** mindestens eine der Wangen (42A, 42B) der zugeordneten Trennwand (42) in Querrichtung mindestens eine Rille (43) aufweist, um ggf. ihr Ablängen zu erleichtern.

13. Abzweigungszubehör nach einem der Ansprüche 11, 12, **dadurch gekennzeichnet, dass** das Dieder, das die beiden Wangen (42A, 42B) der zugeordneten Trennwand (42) miteinander bilden, ein rechtwinkliges Dieder ist.

14. Abzweigungszubehör nach einem der Ansprüche 7 bis 13, **dadurch gekennzeichnet, dass** es in Längsrichtung jenseits seiner Längswände (30) zwei Pritschen (31) aufweist.

15. Abzweigungszubehör nach Anspruch 14, **dadurch gekennzeichnet, dass** die Pritschen (31), die es aufweist, in Finger (33) zerteilt sind.

16. Abzweigungszubehör nach einem der Ansprüche 1 bis 15, **dadurch gekennzeichnet, dass** es an dem seinem Einsteckende (27) entgegengesetzten Ende (34) seines Bodens (26) durch eine Endquerwand (35) abgeschlossen ist.

17. Abzweigungszubehör nach Anspruch 16, **dadurch gekennzeichnet, dass** mindestens ein Teil der Endquerwand (35) abtrennbar ist.

18. Abzweigungszubehör nach einem der Ansprüche 16, 17, **dadurch gekennzeichnet, dass** es an dem seinem Einsteckende (27) entgegengesetzten Ende (34) seines Bodens (26) außen vorstehend Befestigungslappen (36) aufweist.

19. Abzweigungszuhehör nach Anspruch 18, **dadurch gekennzeichnet, dass** die Befestigungslappen (36) abtrennbar sind.

20. Elektrische Anlage, bestehend aus einer auf einer Wand (12) vorstehenden Rinne (11) und einer in diese Wand (12) eingelassenen Zweigleitung (13) mit einem Abzweigungszubehör (25), um eine Verbindung zwischen dieser Rinne (11) und dieser Zweigleitung (13) zu gewährleisten, **dadurch gekennzeichnet, dass** dieses Abzweigungszubehör (25) gemäß einem der Ansprüche 1 bis 19 ausgebildet ist und auf Höhe der Zweigleitung (13) in die Wand (12) eingelassen ist.
